# EUROPEAN PATENT APPLICATION

(11) **EP 4 601 189 A1**
(43) Date of publication of application: **13.08.2025**
(21) Application number: 25150817.2
(22) Date of filing: 09.01.2025
(51) Int. Cl.: H02S 20/00, B63B 35/44, F24S 20/70

(54) **SUPPORT SYSTEM FOR OFFSHORE SOLAR PHOTOVOLTAICS EQUIPMENT**

(30) Priority: 17.01.2024 TW 113101901
(71) Applicant: Sun Rise E & T Corporation, Pingtung City, Pingtung County 90093 (TW)
(72) Inventor: TUNG, Chi-Hsu, 90093 Pingtung City (TW)
(74) Representative: V.O.

(57) **Abstract**

A support system for offshore solar photovoltaics equipment includes a float platform (1), float bodies (2), a ballast member (4), and a carrier frame (6) disposed on the float platform (1) and defining an accommodating space (61). The float platform (1) defines a plurality of limiting grooves (111) each of which extends in the longitudinal direction (A) and that are spaced apart from each other in a transverse direction (8) transverse to the longitudinal direction (A). The float bodies (2) are disposed in the limiting grooves (111) and protrude out of a bottom surface of the float platform (1). Each float body (2) surrounds and defines an inner space (21) adapted for a liquid or a gas to be filled therein. The ballast member (4) is connected to the float platform (1) and extends downwardly from the float platform (1) across bottom sides of the float bodies (2).

## Description

The disclosure relates to a support system, and more particularly to a support system for offshore solar photovoltaics equipment.

Since an onshore solar photovoltaic system requires a large site which is difficult to find and may easily affect people's lives, the offshore solar photovoltaic system is developed. When the offshore solar photovoltaic system is installed distant from the land, in addition to the photovoltaic module for generating power, related electromechanical equipment thereof, such as, the boost converter, the transformer, the inverter, and the power storage, are also to be installed on the sea. There are two common means to install the related electromechanical equipment on the sea. One is a fixed type in which a carrier platform for carrying the related electromechanical equipment is fixed at a predetermined position in the sea using a pile, and another one is a floating type in which the carrier platform is floated on the sea surface. However, in a case where the floating type is adopted, when a part of the carrier platform that is submerged in the sea is relatively large, the surface area of the submerged part of the carrier platform is also relatively large and more undersea creatures might attach to the carrier platform; when the part of the carrier platform that is submerged in the sea is relatively small, the surface area of the submerged part of the carrier platform is also relatively small but the center of gravity of the carrier platform may be located above the center of buoyancy of the carrier platform, such that the carrier platform becomes unstable.

Therefore, an object of the disclosure is to provide a support system for offshore solar photovoltaics equipment that can alleviate at least one of the drawbacks of the prior art.

According to an aspect of the disclosure, there is provided a support system according to claim 1.

Other features and advantages of the disclosure will become apparent in the following detailed description of the embodiment(s) with reference to the accompanying drawings. It is noted that various features may not be drawn to scale.
Figure 1 is a perspective view illustrating an embodiment of a support system for offshore solar photovoltaics equipment according to the disclosure.
Figure 2 is a front view of the support system.
Figure 3 is a fragmentary perspective view illustrating the support system that four foot plates thereof are omitted.
Figure 4 is a fragmentary side section view illustrating a plurality of float bodies and one upper platform of the support system.
Figure 5 is fragmentary front sectional view illustrating series-connection members of the support system.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

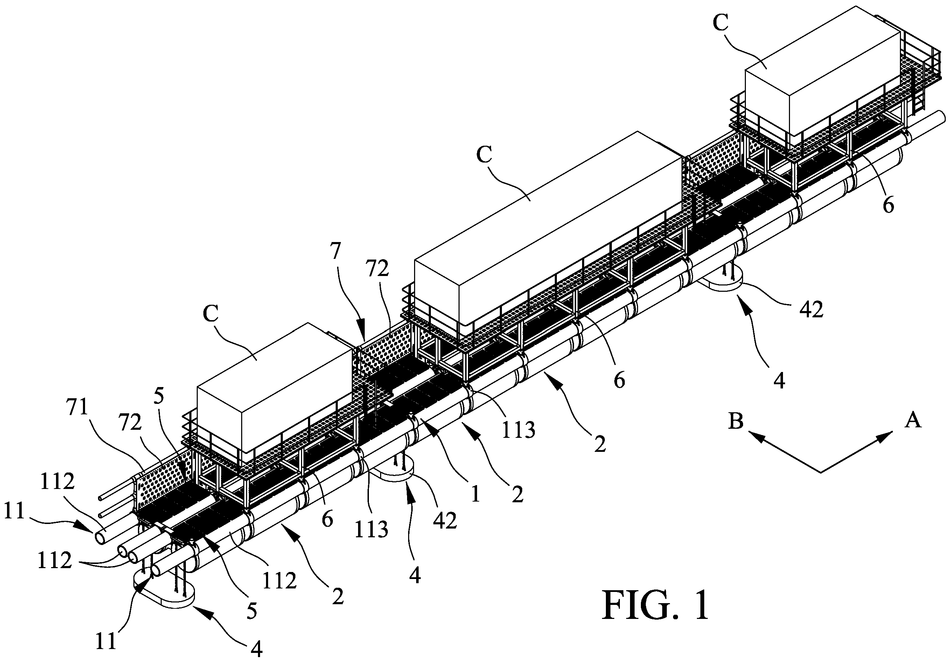

Referring to Figures 1 to 3, according to the disclosure, an embodiment of a support system for offshore solar photovoltaics equipment includes a float platform 1 that extends in a longitudinal direction (A), a plurality of float bodies 2 that are located below the float platform 1, a plurality of reinforcement plates 3 (only one is shown) that connect the float bodies 2, a plurality of ballast members 4 that are connected to the float platform 1 and that extend downwardly from the float platform 1 across bottom sides of the float bodies 2, two upper platform 5 that are disposed on the float platform 1, a plurality of carrier frames 6 that are disposed on the float platform 1, and a protective device 7 that is disposed on the float platform 1.

The float platform 1 includes two float seat modules 11 that are juxtaposed with each other in a transverse direction (B) transverse to the longitudinal direction (A) and that abut against each other in the transverse direction (B). Each of the float seat modules 11 includes two bottom tubes 112 each of which extends in the longitudinal direction (A), that are spaced apart from each other in the transverse direction (B), and that cooperatively define a limiting grooves 111, a plurality of connection seats 113 that are spaced apart from each other in the longitudinal direction (A), each of which extends in the transverse direction (B), and each of which is connected to the bottom tubes 112. The limiting groove 111 of one of the float seat modules 11 is spaced apart from the limiting groove 111 of another one of the float seat modules 11 in the transverse direction (B). In other words, the float platform 1 has two limiting grooves 111 that are respectively defined by the float seat modules 11 and that are spaced apart from each other in the transverse direction (B).

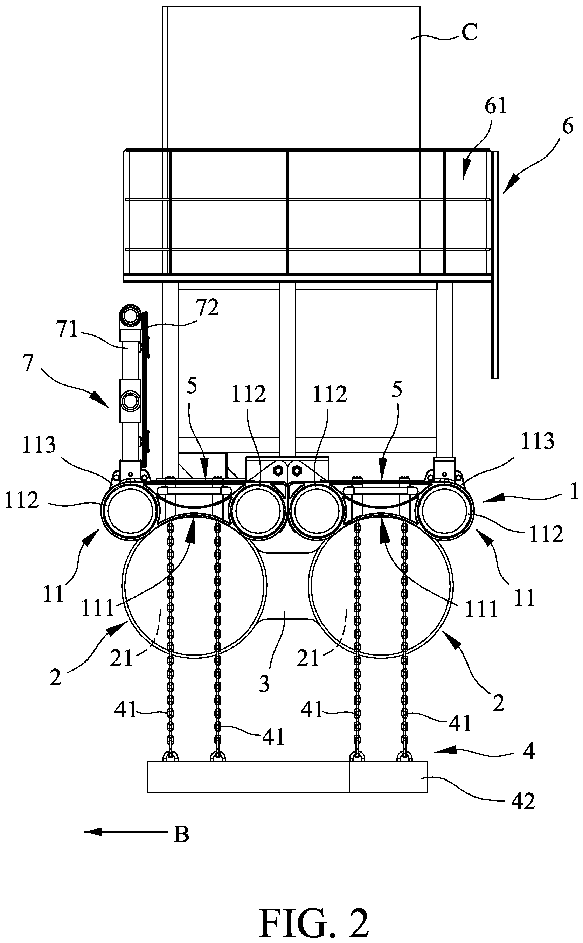

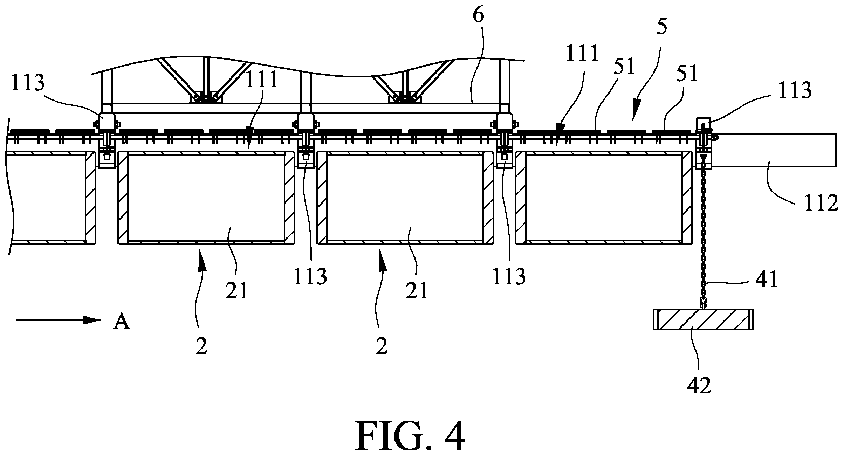

Referring to Figures 2 to 4, the float bodies 2 are divided into two float body groups each of which includes multiple float bodies 2. For each of the float body groups, the float bodies 2 are spaced apart from each other in the longitudinal direction (A) and are disposed in the limiting groove 111 of one of the float seat modules 11, so that the float bodies 2 are limited in the transverse direction (B) by the bottom tubes 112 of the one of the float seat modules 11. Moreover, each of the float bodies 2 of each of the float body groups is limited in the longitudinal direction (A) by two adjacent ones of the connection seats 113 of the one of the float seat modules 11 in the longitudinal direction (A). It should be noted that, although the float bodies 2 are limited by the bottom tubes 112 and the connection seats 113 of the float seat modules 11, the float bodies 2 protrude out of a bottom surface of the float platform 1 from the limiting grooves 111 of the float seat modules 11 to support the float platform 1. Specifically, for each of the float body groups, the float bodies 2 of the float body group protrude out of an imaginary plane that is located below the bottom tubes 112 of the one of the float seat modules 11 and that is tangent to the bottom tubes 112 of the one of the float seat modules 11 from the limiting groove 111 of the one of the float seat modules 11. In this embodiment, each of the float bodies 2 is cylindrical, and surrounds and defines an inner space 21 that is adapted for a liquid or a gas to be filled therein.

Each of the reinforcement plates 3 extends in the transverse direction (B), and two ends thereof are respectively connected to two of the float bodies 2 that are adjacent to each other in the transverse direction (B). Through the connection between the reinforcement plates 3 and the float bodies 2, the float bodies 2 may be more stable.

The ballast members 4 are connected to the connection seats 113 of the float seat modules 11 of the float platform 1. Specifically, each of the ballast members 4 includes a plurality of overhanging members 41 that are connected to two of the connection seats 113 of the float seat modules 11 which are adjacent to each other along the transverse direction (B), and a counterweight block 42 that is connected to the overhanging members 41 and that is located below the float bodies 2.

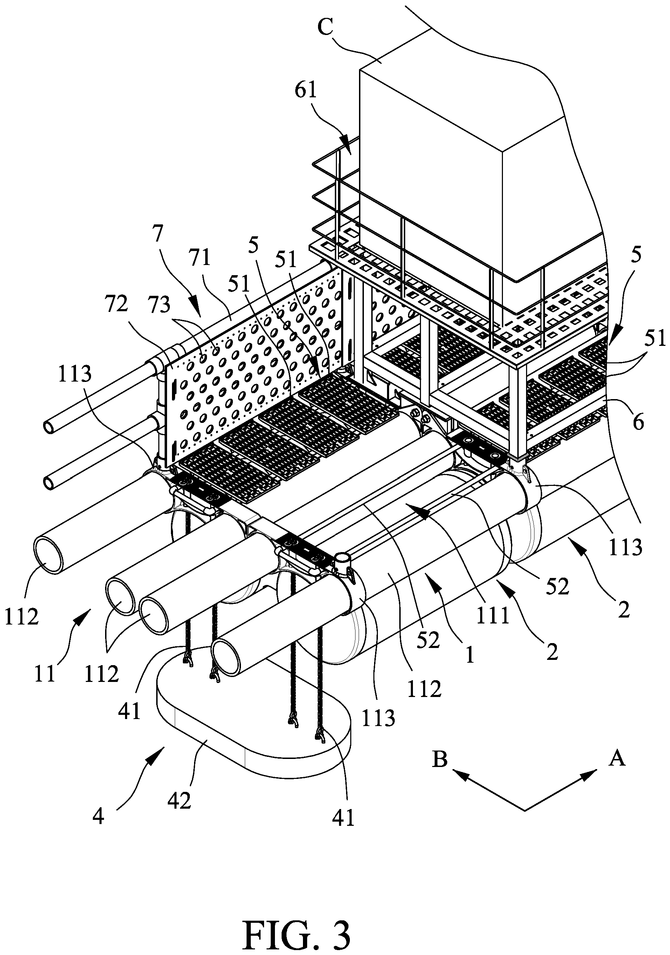

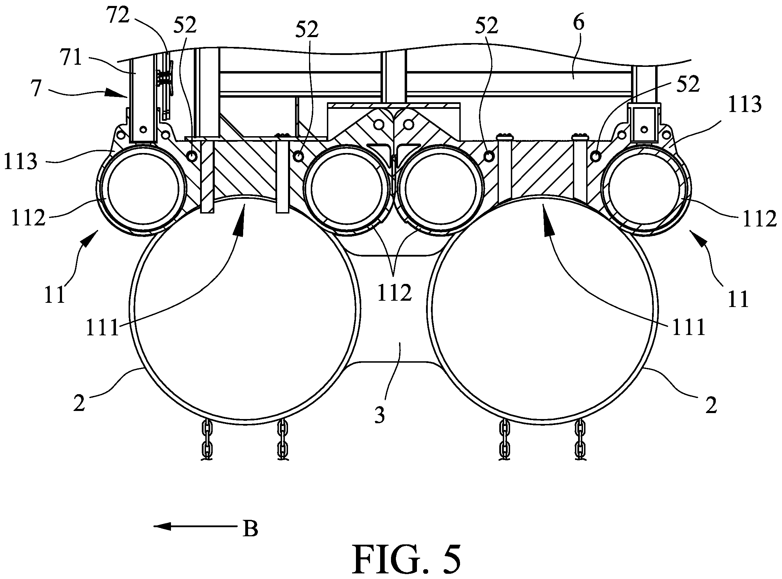

Referring to Figures 3 to 5, the upper platforms 5 are respectively disposed on the float seat modules 11. Each of the upper platforms 5 includes a plurality of foot plates 51 and a plurality of series-connection members 52. For each of the upper platforms 5, each of the foot plates 51 bridges the bottom tubes 112 of the respective one of the float seat modules 11 and extends downwardly into the limiting groove 111 of the respective one of the float seat modules 11, and the series-connection members 52 are located in the limiting groove 111 of the respective one of the float seat modules 11 and concatenate the foot plates 51 in the longitudinal direction (A). For each of the upper platforms 5, the foot plates 51 are divided into a plurality of plate groups each of which includes four foot plates 51. The foot plates 51 of each of the plate groups of each of the upper platforms 5 are located between two adjacent ones of the connection seats 113 of the respective one of the float seat modules 11 in the longitudinal direction (A), and are located directly above one of the float bodies 2.

Each of the carrier frames 6 is disposed on at least one of the connection seats 113 of one of the float seat modules 11 and at least one of the connection seats 113 of another one of the float seat modules 11, and defines an accommodating space 61 for disposing an integrated electromechanical equipment (C). The integrated electromechanical equipment (C) may be a PV box (Photovoltaics box) that a boost converter, a transformer, an inverter, etc., are integrated therein.

The protective device 7 includes a tube rack 71 that is disposed vertically on the connection seats 113 of the float platform 1 and that is located at one side of the float platform 1 along the transverse direction (B), and a plurality of anti-wave boards 72 that are fixedly connected to the tube rack 71 and that are arranged continuously along the longitudinal direction (A). Each of the anti-wave boards 72 is substantially parallel to an imaginary plane that is perpendicular to the transverse direction (B). It should be noted that, for explanatory convenience, a portion of the foot plates 51 of the upper platforms 5 is not shown in Figure 3. Each of the anti-wave boards 72 has a plurality of holes 73 that extend therethrough along the transverse direction (B). The holes 73 of the anti-wave boards 72 allow air to flow therethrough to reduce the effect of wind.

Referring again to Figures 1, 2 and 4, each of the bottom tubes 112 of the float platform 1 is in a hollow shape so that the bottom tubes 112 may float on a liquid (for example, seawater). Furthermore, the density of each of the float bodies 2 may be adjusted as needed by adjusting the gas or the liquid filled in the inner space 21 thereof so that the density of the entire support system may be adjusted and a part of the support system that is submerged in the liquid (e.g. seawater) may be adjusted to prevent underwater creatures (e.g., barnacles) from attaching to the support system. In some embodiments, the gas or the liquid filled in the inner spaces 21 of the float bodies 2 may be adjusted so that the outer surface area of the float bodies 2 submerged in the liquid ranges from 30% to 50% of the entire outer surface area of the float bodies 2. In addition, by virtue of the counterweight blocks 42 of the ballast members 4 being located below the float bodies 2, the center of gravity of the support system is located below the center of buoyancy of the support system, thereby improving the stability of the support system when floating on the liquid.

In practice, the support system of the disclosure may be used to support the integrated electromechanical equipment (C) on the sea that is connected to the offshore solar photovoltaics equipment through a submarine communication cable. Therefore, the location of the support system is relatively close to the shore. At this time, the anti-wave boards 72 of the protective device 7 that are located at one side of the support system in the transverse direction (B) may block the sea waves and the sea wind, and the holes 73 of the anti-wave boards 72 may disperse the sea wind. Therefore, the protective device 7 may provide buffering and protection for the support system.

In summary, according to the support system of the disclosure, the part of the support system that is submerged in the liquid (for example, seawater) may be adjustable for preventing the underwater creatures from attaching to the support system. In addition, the counterweight blocks 42 of the ballast members 4 may make the center of gravity of the support system lower than the center of buoyancy of the support system to improving the stability of the support system. Therefore, the object of the disclosure is indeed achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A support system for offshore solar photovoltaics equipment **characterized by**:
a float platform (1) extending in a longitudinal direction (A), the float platform (1) defining a plurality of limiting grooves (111) each of which extends in the longitudinal direction (A), the plurality of limiting grooves (111) being spaced apart from each other in a transverse direction (B) transverse to the longitudinal direction (A);
a plurality of float bodies (2) disposed in the plurality of limiting grooves (111) and protruding out of a bottom surface of the float platform (1) from the plurality of limiting grooves (111), each of the plurality of float bodies (2) surrounding and defining an inner space (21) that is adapted for a liquid or a gas to be filled therein;
at least one ballast member (4) connected to the float platform (1) and extending downwardly from the float platform (1) across bottom sides of the plurality of float bodies (2); and
at least one carrier frame (6) disposed on the float platform (1) and defining an accommodating space (61).

2. The support system as claimed in claim 1, wherein the float platform (1) includes two float seat modules (11) that are juxtaposed with each other in the transverse direction (B), each of the float seat modules (11) including two bottom tubes (112) that are spaced apart from each other in the transverse direction (B) and that cooperatively define a respective one of the plurality of limiting grooves (111), and a plurality of connection seats (113) that are spaced apart from each other in the longitudinal direction (A) and that are connected to the bottom tubes (112).

3. The support system as claimed in claim 2, wherein the at least one carrier frame (6) includes a plurality of carrier frames (6), each of the plurality of carrier frames (6) being disposed on at least one of the plurality of connection seats (113) of one of the float seat modules (11) and at least one of the plurality of connection seats (113) of another one of the float seat modules (11).

4. The support system as claimed in any one of claims 2 to 3, wherein the at least one ballast member (4) includes a plurality of ballast members (4), each of the plurality of ballast members (4) including a plurality of overhanging members (41) that are connected to two of the plurality of connection seats (113) of the float seat modules (11) which are adjacent to each other along the transverse direction (B), and a counterweight block (42) that is connected to the plurality of overhanging members (41) and that is located below the plurality of float bodies (2).

5. The support system as claimed in any one of claims 2 to 4, further comprising a plurality of reinforcement plates (3) each of which is connected to two of the plurality of float bodies (2) that are adjacent to each other in the transverse direction (B).

6. The support system as claimed in any one of claims 2 to 5, further comprising two upper platforms (5) that are respectively disposed on the float seat modules (11).

7. The support system as claimed in claim 6, wherein each of the upper platforms (5) includes a plurality of foot plates (51) and a plurality of series-connection members (52), for each of the upper platforms (5), each of the plurality of foot plates (51) bridging the bottom tubes (112) of the respective one of the float seat modules (11) and extending into the limiting groove (111) of the respective one of the float seat modules (11), and the plurality of series-connection members (52) being located in the limiting groove (111) of the respective one of the float seat modules (11) and concatenating the plurality of foot plates (51) in the longitudinal direction (A).

8. The support system as claimed in claim 7, wherein, for each of the upper platforms (5), the plurality of foot plates (51) are divided into a plurality of plate groups, each of the plurality of plate groups being located between two adjacent ones of the plurality of connection seats (113) of the respective one of the float seat modules (11) in the longitudinal direction (A).

9. The support system as claimed in any one of claims 1 to 8, further comprising a protective device (7) that is disposed on the float platform (1), the protective device (7) including a tube rack (71) that is disposed vertically on the float platform (1) and that is located at one side of the float platform (1) along the transverse direction (B), and a plurality of anti-wave boards (72) that are fixedly connected to the tube rack (71) and that are arranged continuously along the longitudinal direction (A), each of the plurality of anti-wave boards (72) being substantially parallel to an imaginary plane that is perpendicular to the transverse direction (B), and having a plurality of holes (73) that extend therethrough along the transverse direction (B).
